(19) **Europäisches Patentamt / European Patent Office / Office européen des brevets**

(11) **EP 3 454 280 A1**

(12) # EUROPEAN PATENT APPLICATION

(43) Date of publication:
**13.03.2019 Bulletin 2019/11**

(21) Application number: **17190543.3**

(22) Date of filing: **12.09.2017**

(51) Int Cl.:
***G06Q 30/02*** *(2012.01)*

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(71) Applicant: **Nagravision SA**
**1033 Cheseaux-sur-Lausanne (CH)**

(72) Inventors:
• **JENKINS, David**
**Cwmbran, Gwent NP44 3UW (GB)**
• **OWEN, Will**
**Cwmbran, Gwent NP44 3UW (GB)**

(74) Representative: **Ipside**
**6, Impasse Michel Labrousse**
**31100 Toulouse (FR)**

(54) **CONTENT MANAGEMENT SYSTEM AND METHOD FOR OPERATING SAME**

(57)    In overview, disclosed methods of operating a content management comprise collecting or receiving data which relates to a user's behaviour when using a digital content catalogue, and prior to the consumption of a content item. This collected or received data is processed and analysed to create a data table which may be used to demonstrate to a content manager which items in the digital content catalogue are most difficult to discover in order that the catalogue be re-ordered appropriately. In this way, user behaviour may be used to optimise digital content management systems. Once it is known, for a given digital content item, how discoverable, or indeed undiscoverable it is based on a user's behaviour prior to consuming the content item, that item may be promoted to a more prominent location in the catalogue, or relocated to a different location so as to allow a user to more easily locate it.

Fig. 1

EP 3 454 280 A1

**Description**

FIELD

The present disclosure relates to Content Management Systems, in particular, though not exclusively, to methods and systems in which a catalogue of digital content is provided to a user in order that they might select the digital content for consumption, for example via use of a graphical user interface.

BACKGROUND

Many systems exist which allow users to browse and select digital content for consumption. Users are often presented with a digital catalogue representing a set of digital content items which they can view on a computing device, or on a television, via a set top box. The catalogue will usually be logically ordered in such a way as to allow the user to intuitively navigate to the content which they are looking for. For example, in the context of a catalogue of videos, the videos may be categorised into type/genre, with more popular videos being presented to the user in prime position, say at the head of a list, or simply more prominently than other items. In a system having a well-ordered catalogue, the user should be able to navigate to the items they wish to find easily and efficiently. There is a need to provide an improved content management system.

BRIEF DESCRIPTION OF THE DRAWINGS

FIG.1 illustrates a system comprising a content management system in communication with a plurality of user devices via a communications network;
FIG.2 illustrates a Content management server in further detail;
FIG.3 illustrates a content management terminal in further detail;
FIG. 4 illustrates a user device in more detail;
FIG.5 illustrates a process for identifying content items in a content database which suitable for promotion; and
FIG.6 illustrates a further system comprising a content management system in communication with a plurality of user devices via a communications network illustrates
FIG. 7 illustrates a process for identifying content for promotion in the context of a content management system.

DETAILED DESCRIPTION OF THE DRAWINGS

In overview, disclosed methods of operating a content management comprise collecting or receiving data which relates to a user's behaviour when using a digital content catalogue, and prior to the consumption of a content item. This collected or received data is processed and analysed to create a data table which may be used to demonstrate to a content manager which items in the digital content catalogue are most difficult to discover in order that the catalogue be re-ordered appropriately. In this way, user behaviour may be used to optimise digital content management systems. Once it is known, for a given digital content item, how discoverable, or indeed undiscoverable it is based on a user's behaviour prior to consuming the content item, that item may be promoted to a more prominent location in the catalogue, or relocated to a different location so as to allow a user to more easily locate it.

In some aspects of the disclosure, a method is provided, wherein a plurality of digital content consumption notices, comprising discovery data for one or more content items in a first digital content catalogue, are received at a content management system. The discovery data relates to a user usage type. A first data structure is created, which includes digital content metrics, which themselves include the discovery data for one or more of the digital content items. Subsequently, the digital content metrics are extracted to thereby create a second data structure. Creating the second data structure includes a ranking of one or more digital content items on the basis of the digital content metrics. Instructions are communicated to a user device to cause display of the second data structure.

Advantageously, through the analysis of the received discovery data through the creation of digital content metrics a ranking of the content items is established. This ranking is based on discovery data which can be used to create a discovery value for a content item over time. The discovery values for the content items can be given a ranking which, when provided to a content manager, allows the content manager to update a content catalogue by promoting content which has been determined to have a low discoverability value.

In some embodiments, the user usage behaviour may be broadly broken down into "natural" or "search" behaviour. The behaviour which falls into the "natural" category includes normal browsing behaviour using a user interface, and "search" behaviour is so-called since it relates to the user entering search terms into a search interface. A content management server is arranged to order the received data so as to rate the items in a digital content database according to how ease or difficulty with which users have discovered them, prior to their consumption. The discovery data may be collected during a first period having a start time and an end time, the period starting when a user initiates use of the user interface when it has been inactive for a predetermined time. The time period may end when the user ultimately consumes a piece of content.

Digital content items may be identified for promotion based on the ranking. Once the items have been identified for promotion, a second digital content catalogue may be created, based on the identified digital content items. The digital content catalogue may be communicated to a user device. The extracted digital content metrics may be used to calculate a discovery ratio of user usage type for the content item to which the metrics relate. Advantageously the discovery ratio allows the content manager to understand for each item of content how well placed it is for intuitive of natural discovery rather than the need to enter partial or full search terms in order to find specific content.

In some embodiments, the discovery data received may include further collected user usage data. For example, it may include the number of user inputs into user interface prior to consumption of a content item, the number of searches prior to consumption of a content item, the duration of browse before initiating a search, or an indication of an unsuccessful search followed by the initiation of browse. The metrics can therefore be further enhanced by monitoring not only the type of user interaction with the system, but also the features of the interaction, such as duration, etc. outlined above.

A further discoverability factor may be calculated which includes the total number of discoveries for a content item. Advantageously including the number of discoveries for each content item allows for a discovery value to be calculated and applied to the ranking. The discovery value indicates whether a content item is popular or not, and whether it is being discovered naturally.

Optionally, the method further comprises periodically receiving a list of key terms relating to aggregated user data. Upon receipt of a list, a search of the content items is performed, and a weighting is added to digital content item information in the second data structure, the weighting based on the correlation between the key terms and digital content item metadata retrieved in the search. The ranking of the digital content items may be based on the digital content metrics and the weighting. By applying the extra steps of including key terms, such as trending online data, the ranking of content items can advantageously be made even more relevant and pertinent to a user, based on a combination of the behaviour of users of the system and users of external systems

Further aspects of the disclosure relate to a system comprising a content management server arranged to implement the disclosed methods. The content management server may receive digital content consumption notices from a user device which is arranged to monitor user behaviour in order to collect discovery data for consumed content items.

A digital content item, is any video, music or textual content which is viewable by a user. The terms "digital content item" and "content item" are used interchangeably throughout this disclosure.

Discovery data is data relating to the behaviour of a user in the period prior to consuming an item of digital content. Various examples are provided herein. Usage type or user behaviour is one element of discovery data. User behaviour is defined herein as relating to either a "natural" discovery or a "search" discovery. A natural discovery is defined as one in which the user has utilised the standard functions of a user interface to locate the content item such as moving a selector using up, down, left, and right controls, for example. These standard functions may involve the use of other input devices, for example a computer mouse, or TV remote control. A search discovery is one that has involved the user entering full or partial search terms into a search field presented to the user. A digital content item is an item of content which is presented to a user via a content catalogue. Examples of digital content include, but are not limited to: media content such as video or music, textual content such as books, or newspaper/magazine articles, or similar. An item of digital content is deemed "consumed" when a user takes the necessary action to view that content. For example this may be selecting a visual icon representing the content which is present in a visual representation of the catalogue presented to a user, or touching a playback button provided on touchscreen display so as to commence playback of a video. "Consumption" of a content may be defined as "engaging" with the content; it is not required that a video be played until its conclusion, or a text item be read to the end. By way of example a content item may also be deemed "consumed" at the point in which it is added to a playlist or wishlist, for later consumption by the user. A data consumption notice is therefore an indication that the user has engaged with a content item, and the discovery data provided in the notice gives information about the manner in which a user arrived at their engagement with the content item.

Some specific embodiments are now described by way of illustration with reference to the accompanying drawings in which like reference numerals refer to like features.

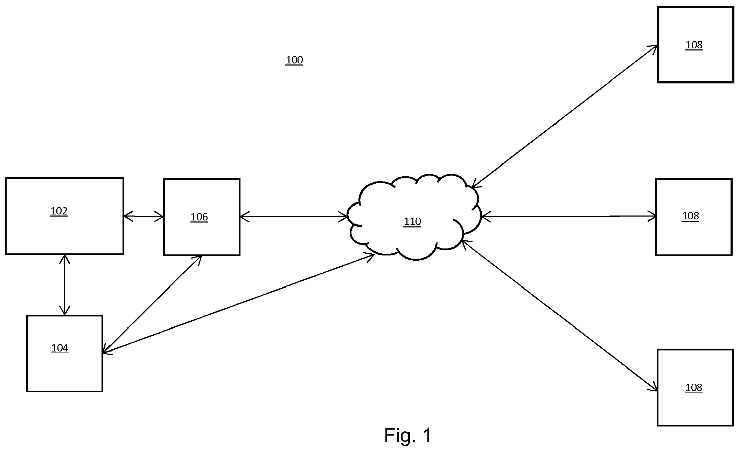

With reference to Figure 1, a system 100 comprises a content management server 102. The content management server 102 is in communication with a content management terminal 104. Both the content management terminal 104 and content management server 102 are in communication with a data collector 106. Content management terminal is in communication with client user devices 108 via communications network 110. In some embodiments, the content management server 102 and the content management terminal 104 are combined.

The data collector 106 receives data from client user devices 108 relating to user usage behaviour via communications network 110. A client user device 108 may be a set top box connected to a television or other display device, or may indeed be any device on which it is possible to view digital content. Such devices may include computing devices such as personal computers, laptops, tablet devices, and mobile devices such as smartphones or PDAs, or e-readers.

The client user device collects data relating to user behaviour prior to consumption of a digital content item. This data is forwarded to data collector 106 periodically, or at a time related to the consumption by the user of a content item at user device 108. The data collector provides content management server 102 with discovery data which includes various determined user behaviour metrics, described more fully below. The content management server 102 receives the discovery data and associates the data to content metadata located in a content metadata repository. The discovery data, including usage behaviour metrics, can be used to update content metadata in the content metadata repository. The content metadata repository stores information relating to content items in a content library. Digital content metrics are created from the discovery data, the digital content metrics relating the user behaviour to the specific item in the content library which is deemed consumed by the user. Periodically, a calculation of the "discoverability" of the content items is carried out based on the metrics, and each content item for which data is available is assigned a discoverability ratio and/or a discoverability factor. Once the calculation is complete, a ranking of the content items is created, and may be sent to content management terminal 104 for display to a content manager. The content manager may then decide to promote a given content item based on its position in the ranking and the discoverability factor.

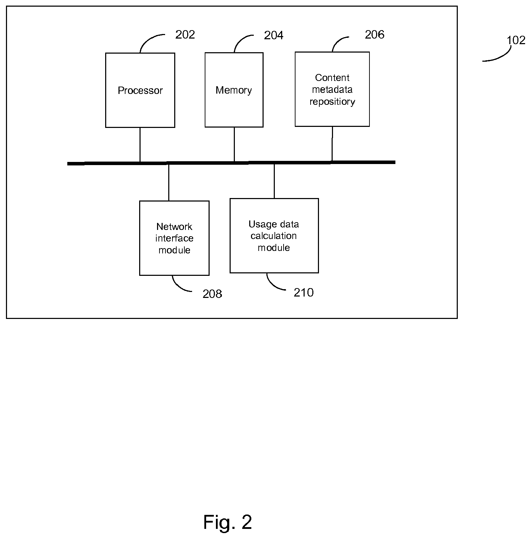

With reference to Figure 2, some embodiments of the content management server 102 are now described. The content management server 102 comprises a processor 202, in communication with a memory 204, a content metadata repository 206, a network interface module 208, a usage data calculation module 210 The processor 202 is arranged to coordinate between the content metadata repository 206, the network interface module 208, usage data calculation module 210. The memory 204 can store instructions for execution by the processor 202 to cause the processor 202 to provide desired functionality.

The network interface module 208 is arranged to receive discovery data output from the data collector 106 and pass it to usage data calculation module 210. The network interface module is further arranged to send data from the content management server 102 to the content management terminal 108. Usage data calculation module 210 receives the discovery data including usage behaviour metrics and associates the data with metadata stored in the content metadata repository 206 in order to create a data structure including discoverability data for each content item. The data structure may take the form of an ordered list which highlights the digital content items which have a low discoverability factor.

Usage data calculation module 210 ingests the discovery data including usage behaviour metrics, and over a given timeframe or time period, maintains a tally of the number of consumption notices relating to consumption of a content item for which metadata is stored in the content metadata repository. The tally relates the number of consumption notices which are determined to relate to natural discoveries or search discoveries. The usage data calculation module periodically calculates a ratio of the number of natural discoveries to the number of search discoveries to provide a "natural discovery ratio". This is defined as:

$$\text{Natural discoveries} \; / \; \text{search discoveries} \; = \; \text{natural discovery ratio.}$$

Lower ratios for given content items indicate that the content items are difficult to discovery naturally, without the use of a search function. In this way, the content management server 102, together with the data collector calculates a discovery ratio for all of the content items in the system.

One enhancement to the discoverability ratio factors in the total number of views into the calculation. This not only provides the ability to identify what the discoverability was but also the volume of discoverability. This can be calculated as follows:

$$(\text{Natural discovery} \; / \; \text{search discoveries}) \; * \; \text{total number of discoveries} \; = \; \text{discovery value,}$$

where large numbers indicate that the content is popular and being discovered naturally. Small numbers indicate that the content is unpopular or not naturally discovered. The usage data calculation module may also compare the total number of discoveries (or consumptions) within a certain period and compare this number to a baseline number for a corresponding period which is stored in the content metadata repository. If a content item is consumed significantly more than the baseline this would indicate that a content item has become recently more popular. A content item that is determined to satisfy an upsurge in popularity also has a low discovery ratio or discovery value, this indicates that the content item is not located in a place in the digital content catalogue which is conducive to being discovered naturally. When such a determination is made, the content item may have a data flag applied to its entry in the list indicating that it is a candidate for promotion

The content metadata repository 206 contains metadata regarding the content items which are present in the system. As stated previously, digital content may include video content, including feature films and television series. The metadata stored for the content items includes links between a content item and other similar content items. For example, the episodes of a television series will be associated with one another, and films forming part of a series may be linked or grouped. When creating the data structure, the usage data calculation module 210 may evaluate discrepancies in discovery values and ratios for linked or grouped content items. When creating the list, the discovery ratio or value for a content item may be compared with the ratio or value for a linked content item. Where a difference exists which is larger than a predetermined size, a data flag may be applied to the content item or linked item having the lower of the two ratios or values, indicating that the content item is a candidate for promotion.

As mentioned above, the usage data calculation module 210 creates a data structure comprising an ordered list of the content in the system. This list may be created periodically, for example daily, or even hourly. The list may be created on receipt of a user request. The list may include metadata relating to a popularity surge or a discrepancy between content items linked as part of a group, as outlined above. Such metadata may be used to flag to a content manager that a content item is particularly suitable for promotion.

Once created, the ranked list is communicated to the content management terminal 104.

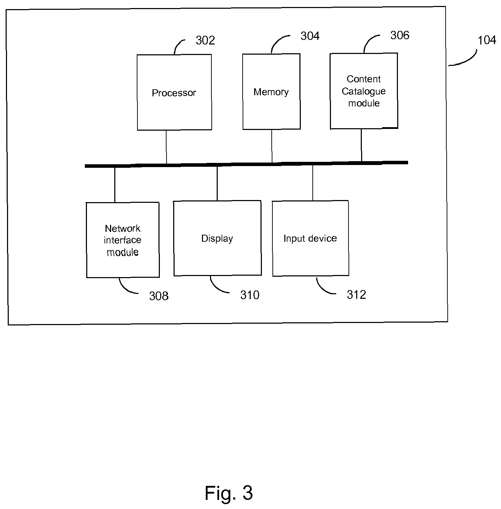

With reference to Figure 3, some embodiments of the content management terminal 104 are now described. The content management terminal 104 comprises a processor 302, in communication with a memory 304, a content catalogue module 306, a network interface module 308, a display 310 and an input device 312. The processor 302 is arranged to coordinate between the content metadata repository 306, the network interface module 308, display 210 and input device 312. The memory 304 can store instructions for execution by the processor 302 to cause the processor 302 to provide desired functionality.

The content management terminal 104 receives a data structure from content management server 102. The data structure comprises the ranked list of content including metadata determined from the discovery data metrics by the usage data calculation module 210. The data structure may be communicated with instructions causing it to be displayed to a content manager via display 310. A content manager may review the transmission from content management server 102 and determine which of the flagged content items or content items which have low discoverability values or ratios are to be promoted. The content manager then updates or otherwise modifies a content catalogue stored in content catalogue module 306. Updating or modifying the content catalogue may involve re-ordering content items within the catalogue, or applying new metadata to a content item in order that it be displayed differently upon rendering of the catalogue. The content catalogue may store one or more versions of the content catalogue, or may comprise instructions which cause the rendering of the catalogue at a user device upon user initiation of a user interface. The catalogue may then be constructed or otherwise built in dependence on the instructions, and further user metadata related to the user's usage habits or other information known about the user. In this way, a global catalogue may be provided to all users of the system, or tailored catalogues may be provided to specific users, for example based on user location, age, or other demographic information.

If it is determined by the usage data calculation module 210, for example, that the second film in a film series has a low discovery ratio and a low discovery value, as defined above, whereas the first film in the same series has received a surge in popularity, and has a standard discovery ratio, the content manager may modify the content catalogue so as to promote the second film to a location in which it is more naturally discoverable, so that users are more likely to naturally discover and consume a content item which is related to the already popular first film. The content manager may also promote the first film based on the popularity surge.

The content management terminal 104 may form part of the content management server 102 itself. The identification of items for promotion may be carried out automatically based on the values of discovery ratio and discovery value which are determined. In this case the content catalogue module 306 may automatically create an updated version of the digital content catalogue with the items identified for promotion moved into more prominent or discoverable locations, in order that the user has a better chance of naturally discovering them. The updated catalogues may be created periodically, or be created where a comparison of discovery values exceeds a threshold, which indicates that an item is particularly popular and is in need of promotion. Once a new catalogue is created by the content catalogue module 306, it may be pushed out to one or more user devices 108 via the network 110.

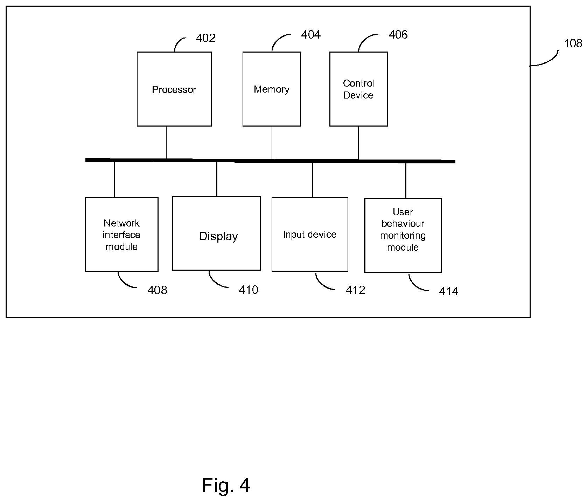

With reference to Figure 4, some embodiments of the user device 108 are now described. The user device 108 comprises a processor 402, in communication with a memory 404, a control device 406, a network interface module 408, a display 410, an input device 412 and a user behaviour monitoring module 414. The processor 402 is arranged to coordinate between the content metadata repository 406, the network interface module 408, display 410 and input device 412. The memory 404 can store instructions for execution by the processor 402 to cause the processor 402 to provide desired functionality.

User device 108 may be a set top box, or other electronic or computing device on or through which a user may view digital content. The user of the device is presented with a digital content catalogue, viewable on display 410. The user interacts with the digital content catalogue through means of a user interface. The user interface may be navigated through use of the control device 414. A user interface may present a user with the option to move a cursor up, down, left, right, or back through a presented array or list of content items, prior to selecting a content item, as is well known in the art. The control device 414 may be a mouse, connected wirelessly or via a wired connection to the user device 108, or be a remote control device not forming an integral part of user device 108. In the event that a user is unable to locate a desired content item through the use of the natural browsing environment of the user interface of the digital content catalogue, the user may initiate a search function. The search terms are input through the input device 412. A search function most generally includes the entry of all or part of a text string. Input device 412 may be a keyboard, or may be specific buttons provided on the remote control device described above. Browsing control and input functions may also be provided via a touchscreen interface (not shown) of an example user device.

Data on a user's usage of the digital content catalogue is monitored and collected by user behaviour monitoring module 414. The collected data is sent to data collector 106 through network interface module 408. The sending of user usage data may be done periodically, based on a measured time interval since a session start time being exceeded, as discussed below. User behaviour may be logged as individual commands entered into the control device in the natural browsing environment. A "left" command may be logged as a single event. The sending of user usage data may be done when a particular number of events is reached. The memory 404 may comprise a local cache in which a limited number of events may be stored, prior to being communicated to data collector 106 through network communication interface 408.

An important part of the invention is the starting point of the monitoring and collection of data during the content discovery process, and the content name/ID of the content consumed as a result of the discovery process. For example, when the user device 108 has been at rest for a predetermined period, which may be a number of minutes, and there has been no user interaction, the user interface is considered to be ready for a fresh content discovery session. When the system is considered ready for a fresh content discovery session, the first user interaction with the user device will cause a session start event to be logged. The discovery data event end is determined as when the user consumes a media content item, and the discovery data may therefore comprise both natural browsing and search event data.

In an example scenario, a first user begins a session at the user device 108. This takes place after a predetermined system idle time has been reached, and so a new session event is logged. The user begins naturally browsing through the content catalogue, using buttons on their control device to directionally navigate through the system. Each time the user enters a browsing instruction, this is logged as an event. After a period of natural browsing the user selects a content item for consumption. This may be by pressing a "play" button to start a video in the caser that the content catalogue is a video catalogue. This is logged as a session end event, and the discovery data is communicated to the data collector through the network communication interface. The data collected by the user device is analysed by the data collector and defined as a natural discovery event, which is associated with a content name or content ID included in the session end event data.

A further user using a different user device 108 similarly begins a session, also taking place after a predetermined system idle time has been reached, which is logged locally at the user device as a new session event. The further user commences naturally browsing, and a number of browsing events are logged, however the further user turns to a search function, selecting a search function, for example displayed on the display, and enters a partial name for a content item. The user then selects an item returned by the search for consumption. At this point, the session end event is created, and the discovery data is communicated through the network communication interface to the data collector. The data received by the data collector from the user device 108 is analysed by the data collector and defined as a search discovery event, because of the use of search. The search discovery event is also associated with the content ID or name of the consumed content, present in the session end event data.

The data collector continues to collect a plurality of such discovery events from the user devices present in the system during a predetermined time period. Each of the events may comprise metadata which includes the amount of browsing data, nature of the browsing, time data indicating length of browsing before a user resorted to a search. The data collector forwards the data collected over the predetermined time period to the content management system 102, which then computes, for the content items, the discovery ratios and values for the content items.

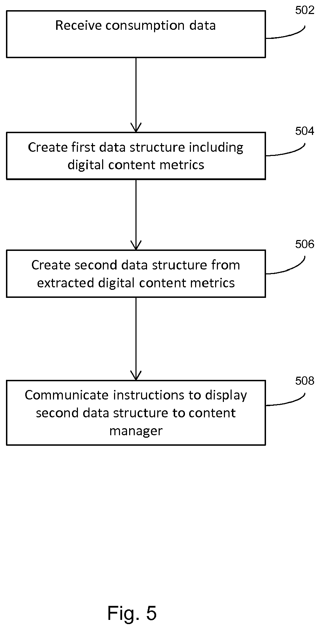

Referring to figure 5, a method of operating a content management system is described. At step 502, consumption data is received. The consumption data relates to the consumption of a content item at a user device, following user selection of the content item. The consumption data comprises discovery data relating to the manner in which the user arrived at the selection of the content item. This discovery data may be categorised as natural browsing event data or search event data. The discovery data relates to a discovery session which is deemed to have started after a predetermined time period has passed since previous use of a user interface at the user device. The consumption data is received at data collector 106. Alternatively, the data collector may form part of a content management server 102, which receives the consumption data. Consumption data may be received from one or more user devices, and relates to a plurality of consumption events.

At step 504, the data collector creates a first data structure including digital content metrics. This data structure is created from the discovery data events which are received from the user device. A separate entry is created in the data structure is created for each item of digital content which has been consumed, and digital content metrics are created as part of the data structure. These digital content metrics may include but are not limited to the number of browsing events, the browsing event types, duration of browse etc.

At step 506, a second data structure is created from the digital content metrics extracted from the first data structure. The second data structure comprises a list of all of the content items which have been consumed, and comprises calculated discoverability values and or factors for each content item in the list.

At step 508, the second data structure is communicated to a content manager for display. This presents the content manager with an intuitive basis on which to select content for promotion. The second data structure may also comprise flagged content which is deemed particularly suitable for promotion.

In an embodiment, content management system may receive information regarding subjects or keywords which are subject of a temporary spike in consumer interests. The information is received from one or more external sources in the form of a hotword list. The receipt of consumer interest or trend data allows for content managers to identify content which could be subject to promotion to an end user of the content management system. Such a temporal spike in consumer interest may be caused by news, events, or anything which causes names, content or subjects to trend.

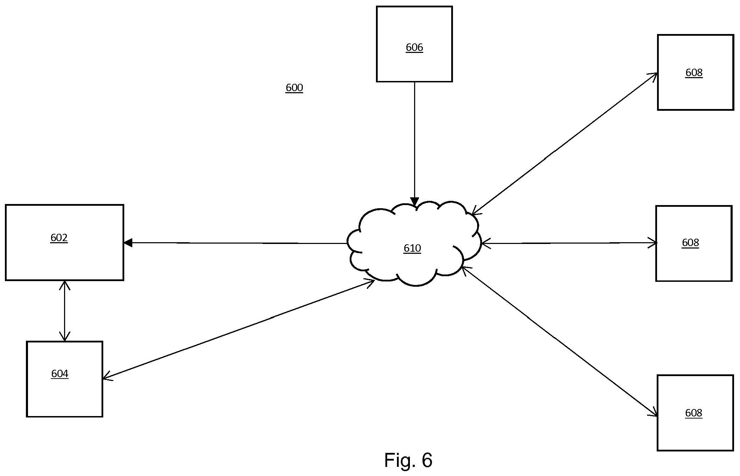

Referring to Figure 6, some embodiments of a content management system and environment will be described. System 600 comprises a content management server 602, content management terminal 604, hotword list generator 606, and a plurality of end user devices 608 connected which communicate with the content management system and content management terminal via means of communications network 610. The features of the components forming the system 600 are analogous to those shown in Fig. 1 and described above with respect to Figs. 2 to 4.

Content management server 602 receives one or more hotword lists from hotword list generator 606 via means of communications network 610. Hotword list generator 606 can create hotword lists using a variety of techniques, including monitoring trending topics on social media platforms such as Twitter®, and website scraping. The hotword lists received from hotword generator will comprise trend weighting information to indicate how "hot" a particular term is, that is to say just how on trend a particular term is.

The content management server 602 uses the hotword list and matches content in a content database with the terms in the list. Each item in the hotword list is used as the basis of a search for matching content. The system iterates through each term in the hotword list, searching the database for matching content, and provides a relative weighting of the quality of the match between the term and the list of content items which are returned as a result of the search.

Therefore, for each hotword in the hotword list, a secondary list of matching content is provided. By using a combination of the trend weighting and the match quality weighting the system creates a data structure including a recommended list of content items for each hotword, identified as suitable for promotion. One or more lists may be provided, relating to one or more hotword terms. The list of recommended items may be provided to the content manager periodically, for example daily, or where a particularly strong weighting of trend and match is combined, an alert may be sent to the content manager. A content manager is able to review the list or lists in order to determine whether to promote one or more items from the list to the end consumer. The promotion of content items may take place through the creation of an updated catalogue of content which is communicated to the users. The content catalogue may be communicated globally to all end users of the system, or on the basis of user information known about each user.

The creation of a new content catalogue including promoted items identified by the creation of the recommend list may be carried out automatically. This new content catalogue may be presented to a content manager, or may be automatically communicated to the end users as described above.

The hotword list is ingested into the content management system through a rest-like API.

As shown in Figure 6, this embodiment may be used to provide updated content catalogue to end users based on trend information. It may also be combined with the system shown in Figures 1 to 4, and described above, to provide an improved content management system.

In this case the list of content items recommended from the search of content matching the hotword lists is cross referenced against the content items which are identified as suitable for promotion based on the user interaction with the content catalogue via the user interface at the user device. Since both the hotword lists and discovery data both relate to user interest, this system allows for information gathered from both within the content management system and external to the content management system to be combined in order to provide the user with an improved system.

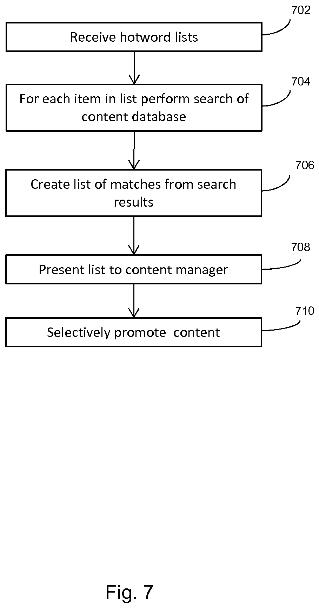

Referring to figure 7, a method of operating a content management system is described.

In step 702, a list of hotwords is received at a content management server 602 from an external source. The hotword lists include weightings for each term indicating the strength of trend data associated with the term. It may be, for example that the hotword list comprises a list of actors mentions from a social media platform within a 24 hour period. The number of mentions will be reflected in the weighting applied to the hotword.

In step 704, a search of a content database is performed for each item in the hotword list. The search may be performed by a SOLR search engine.

In step 706, a list of matches from the search results is generated for each of the items by the SOLR search engine. The list of matches is ordered by relevance to the hotword. In the case that the hotword is the name of an actor, for example, video content featuring that actor will be highly relevant.

In step 708, a list of content which is deemed relevant is presented to a content manager. The content manager then may selectively promote content in a digital content catalogue to be communicated to a user, in step 710.

The hotword lists may be regularly ingested into the content management server 602, and the subsequent steps of the method performed each time a list is ingested. This provides a constantly changing and updated list of recommended content for a content manager.

The hotword lists can be used over time to iteratively improve metadata associated with content items. The search results may be used to improve the relevance of terms associated with digital content in a content metadata repository.

Referring back to Figures 2, 3, and 4 the devices shown each include a processor (in other words a processing device) 202, 302 in communication with a memory 204, 304. The memory 204, 304 of each of devices may comprise one or more of a main memory (e.g., read-only memory (ROM), flash memory, dynamic random access memory (DRAM) such as synchronous DRAM (SDRAM) or Rambus DRAM (RDRAM), etc.), a static memory (e.g., flash memory, static random access memory (SRAM), etc.), and a secondary memory (e.g., a data storage device), which communicate with each other via a bus.

The processing device 202, 302 of each of the devices may comprise one or more general-purpose processors such as a microprocessor, central processing unit, or the like. More particularly, the processing device may be a complex instruction set computing (CISC) microprocessor, reduced instruction set computing (RISC) microprocessor, very long instruction word (VLIW) microprocessor, processor implementing other instruction sets, or processors implementing a combination of instruction sets. The processing device may also be one or more special-purpose processing devices such as an application specific integrated circuit (ASIC), a field programmable gate array (FPGA), a digital signal processor (DSP), network processor, or the like. The processing device is configured to execute the processing logic (instructions) for performing the operations and steps discussed herein.

The data storage device may include one or more machine-readable storage media (or more specifically one or more non-transitory computer-readable storage media) on which is stored one or more sets of instructions embodying any one or more of the methodologies or functions described herein. The instructions may also reside, completely or at least partially, within the main memory and/or within the processing device during execution thereof by the computer system, the main memory and the processing device also constituting computer-readable storage media.

The various methods described above may be implemented by a computer program. The computer program may include computer code arranged to instruct a computer to perform the functions of one or more of the various methods described above. The computer program and/or the code for performing such methods may be provided to an apparatus, such as a computer, on one or more computer readable media or, more generally, a computer program product. The computer readable media may be transitory or non-transitory. The one or more computer readable media could be, for example, an electronic, magnetic, optical, electromagnetic, infrared, or semiconductor system, or a propagation medium for data transmission, for example for downloading the code over the Internet. Alternatively, the one or more computer readable media could take the form of one or more physical computer readable media such as semiconductor or solid state memory, magnetic tape, a removable computer diskette, a random access memory (RAM), a read-only memory (ROM), a rigid magnetic disc, and an optical disk, such as a CD-ROM, CD-R/W or DVD.

In an implementation, the modules, components and other features described herein can be implemented as discrete components or integrated in the functionality of hardware components such as ASICS, FPGAs, DSPs or similar devices.

A "hardware component" is a tangible (e.g., non-transitory) physical component (e.g., a set of one or more processors) capable of performing certain operations and may be configured or arranged in a certain physical manner. A hardware component may include dedicated circuitry or logic that is permanently configured to perform certain operations. A hardware component may be or include a special-purpose processor, such as a field programmable gate array (FPGA) or an ASIC. A hardware component may also include programmable logic or circuitry that is temporarily configured by software to perform certain operations.

Accordingly, the phrase "hardware component" should be understood to encompass a tangible entity that may be physically constructed, permanently configured (e.g., hardwired), or temporarily configured (e.g., programmed) to operate in a certain manner or to perform certain operations described herein.

In addition, the modules and components can be implemented as firmware or functional circuitry within hardware devices. Further, the modules and components can be implemented in any combination of hardware devices and software components, or only in software (e.g., code stored or otherwise embodied in a machine-readable medium or in a transmission medium).

Unless specifically stated otherwise, as apparent from the following discussion, it is appreciated that throughout the description, discussions utilizing terms such as "receiving", "determining", "comparing ", "enabling", "maintaining," "identifying," "generating," "associating," "inputting," "authenticating," "adding," "transmitting," "processing," or the like, refer to the actions and processes of a computer system, or similar electronic computing device, that manipulates and transforms data represented as physical (electronic) quantities within the computer system's registers and memories into other data similarly represented as physical quantities within the computer system memories or registers or other such information storage, transmission or display devices.

It is to be understood that the above description is intended to be illustrative, and not restrictive. Many other implementations will be apparent to those of skill in the art upon reading and understanding the above description. Although the present disclosure has been described with reference to specific example implementations, it will be recognized that the disclosure is not limited to the implementations described, but can be practiced with modification and alteration within the spirit and scope of the appended claims. Accordingly, the specification and drawings are to be regarded in an illustrative sense rather than a restrictive sense. The scope of the disclosure should, therefore, be determined with reference to the appended claims, along with the full scope of equivalents to which such claims are entitled.

**Claims**

1.  A method, comprising:

    receiving, at a content management system, a plurality of digital content consumption notices comprising discovery data for one or more content items in a first digital content catalogue, the discovery data relating to a user usage type of a user interface;
    creating a first data structure including digital content metrics, the digital content metrics including the discovery data for one or more of the digital content items; the method further comprising,
    extracting digital content metrics to thereby create a second data structure, wherein creating the second data structure includes a ranking of one or more digital content items on the basis of the digital content metrics;
    communicating instructions to cause display of the second data structure at a content management terminal.

2.  The method of claim 1, wherein the user usage type being one of:

    the navigation of the first digital content catalogue via a user interface; and
    the entering of search terms into a search interface.

3.  The method of claim 2, wherein digital content consumption notices comprise data collected between a first period start time and a first period end time, wherein first period start time is identified at where a user initiates the user interface when the user interface has been at rest for a predetermined period of time and the first period end time is when the user digital content is consumed.

4.  The method of any preceding claim, further comprising
    in the step of creating the second data structure: identifying digital content items for promotion based on the rankings;
    automatically creating a second digital content catalogue based on the identified digital content items, and electronically communicating the second digital content catalogue to a client user device.

5.  The method of any of claims 1 to 3, wherein the extracted digital content metrics are used to calculate a discovery ratio of user usage type for the content item to which the metrics relate.

6.  The method of any preceding claim, wherein discovery data include one or more of:

    the total number of discoveries for a content item;
    number of user inputs into user interface prior to consumption of a content item;
    number of searches prior to consumption of a content item;
    duration of browse before initiating a search; and
    an indication of an unsuccessful search followed by the initiation of browse.

7.  The method of any preceding claim, further comprising:

    periodically receiving a list of key terms relating to aggregated user data;
    upon receipt of a list, performing a search of the content items;
    adding a weighting to digital content item information in the second data structure, the weighting based on the correlation between the key terms and digital content item metadata retrieved in the search, and wherein the ranking of the digital content items is based on the digital content metrics and the weighting.

8. The method of claim 7 wherein the list of key terms relates to aggregated user data collected in a predetermined time period.

9. The method of claim 8 wherein the aggregated user data relates to social media data.

10. A system, comprising:

a content management server, arranged to receive a plurality of digital content consumption notices comprising discovery data for one or more content items in a first digital content catalogue, the discovery data relating to a user usage type of a user interface;
create a first data structure including calculating digital content metrics, the digital content metrics including the discovery data for one or more of the digital content catalogue items;
the method further comprising,
extract digital content metrics to thereby create a second data structure, wherein creating the second data structure includes a ranking of the digital content catalogue items on the basis of the digital content metrics;
communicate instructions to cause display of the second data structure at a content management terminal.

11. The system of claim 11, wherein the digital content consumption notices are received from a user device arranged to monitor user behaviour in order to collect the discovery data, and the usage type is one of:

the navigation of the first digital content catalogue via a user interface; and
the entering of search terms into a search interface.

12. The system of claim 12, wherein the discovery data is collected by the client user device between a first period start time when a user starts use of a graphical user interface after a predetermined non-use period, and a first period end time when a digital content item is consumed.

13. The system of claim 13, wherein the content management server is arranged to receive a list of key terms relating to aggregated user data; and
upon receipt of a list, perform a search of the content items;
adding a weighting to digital content items in the second data structure, the weighting based on the correlation between the key terms and digital content item metadata, and wherein the ranking of the digital content items is based on the digital content metrics and the weighting.

14. A computer program product comprising instructions which, when the program is executed by a computer, cause the computer to carry out the method of any of claims 1 to 9.

15. A non-transitory computer readable medium having computer-executable instructions that, when executed on a computer system, implement the method of any of claims 1 to 9.

Fig. 1

Fig. 2

302 Processor

304 Memory

306 Content Catalogue module

104

Network interface module

Display

Input device

308

310

312

Fig. 3

Fig. 4

502

Receive consumption data

504

Create first data structure including digital content metrics

506

Create second data structure from extracted digital content metrics

508

Communicate instructions to display second data structure to content manager

Fig. 5

Fig. 6

```
┌─────────────────────────────────┐  702
│      Receive hotword lists       │
└─────────────────────────────────┘
                 │
                 ▼
┌─────────────────────────────────┐  704
│ For each item in list perform search of │
│        content database          │
└─────────────────────────────────┘
                 │
                 ▼
┌─────────────────────────────────┐  706
│   Create list of matches from search  │
│             results              │
└─────────────────────────────────┘
                 │
                 ▼
┌─────────────────────────────────┐  708
│    Present list to content manager    │
└─────────────────────────────────┘
                 │
                 ▼
┌─────────────────────────────────┐  710
│    Selectively promote  content     │
└─────────────────────────────────┘
```

Fig. 7

Europäisches
Patentamt
European
Patent Office
Office européen
des brevets

# EUROPEAN SEARCH REPORT

Application Number

EP 17 19 0543

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2009/055385 A1 (JEON JOON-HEE [US] ET AL) 26 February 2009 (2009-02-26)<br>* paragraph [0022] - paragraph [0024] *<br>* paragraph [0037] - paragraph [0038] *<br>* paragraph [0043] - paragraph [0047] *<br>* paragraph [0065] *<br>* paragraph [0072] *<br>* paragraph [0084] - paragraph [0085] *<br>* paragraph [0096] - paragraph [0104] *<br>* paragraph [0112] *<br>* paragraph [0117] *<br>----- | 1-15 | INV.<br>G06Q30/02 |
| X | US 2013/103550 A1 (NYGAARD CARL PATRICK [US] ET AL) 25 April 2013 (2013-04-25)<br>* paragraph [0022] *<br>* paragraph [0033] *<br>* paragraph [0037] *<br>* paragraph [0042] *<br>* paragraph [0056] - paragraph [0058] *<br>----- | 1-15 | |

TECHNICAL FIELDS
SEARCHED      (IPC)

G06Q

The present search report has been drawn up for all claims

| Place of search | Date of completion of the search | Examiner |
|---|---|---|
| The Hague | 19 December 2017 | van Praagh, Kay |

EPO FORM 1503 03.82 (P04C01)

# EP 3 454 280 A1

## ANNEX TO THE EUROPEAN SEARCH REPORT
## ON EUROPEAN PATENT APPLICATION NO.

EP 17 19 0543

This annex lists the patent family members relating to the patent documents cited in the above-mentioned European search report.
The members are as contained in the European Patent Office EDP file on
The European Patent Office is in no way liable for these particulars which are merely given for the purpose of information.

19-12-2017

| Patent document cited in search report | Publication date | Patent family member(s) | Publication date |
|---|---|---|---|
| US 2009055385 A1 | 26-02-2009 | AU 2008293668 A1 | 05-03-2009 |
| | | CA 2697489 A1 | 05-03-2009 |
| | | CN 101828393 A | 08-09-2010 |
| | | EP 2183917 A2 | 12-05-2010 |
| | | JP 5264908 B2 | 14-08-2013 |
| | | JP 2010537578 A | 02-12-2010 |
| | | KR 20100044867 A | 30-04-2010 |
| | | US 2009055385 A1 | 26-02-2009 |
| | | US 2013007792 A1 | 03-01-2013 |
| | | US 2014109139 A1 | 17-04-2014 |
| | | US 2015281785 A1 | 01-10-2015 |
| | | WO 2009029488 A2 | 05-03-2009 |
| US 2013103550 A1 | 25-04-2013 | US 2013103550 A1 | 25-04-2013 |
| | | WO 2013062970 A1 | 02-05-2013 |

EPO FORM P0459

For more details about this annex : see Official Journal of the European Patent Office, No. 12/82